# EUROPÄISCHE PATENTSCHRIFT

(11) **EP 3 341 219 B1**
(45) Veröffentlichungstag und Bekanntmachung des Hinweises auf die Patenterteilung: **04.08.2021**
(21) Anmeldenummer: 16757871.5
(22) Anmeldetag: 25.08.2016
(51) Int. Cl.: B44C 5/04, B60R 13/04, B44F 1/02, B21C 23/14

(54) **ZIERLEISTE**
DECORATIVE STRIP
BAGUETTE DÉCORATIVE

(30) Priorität: 27.08.2015 DE 202015104539 U
(43) Veröffentlichungstag der Anmeldung: 04.07.2018
(73) Patentinhaber: Erbslöh Aluminium GmbH, 42553 Velbert (DE)
(72) Erfinder: LÖCHTE, Lothar, 40723 Hilden (DE); MUTZBERG, Dirk, 42111 Wuppertal (DE); SCHEIBE-HANFT, Rolf, 44805 Bochum (DE); SUCKE, Norbert William, 47269 Duisburg (DE)
(74) Vertreter: Buse, Mentzel, Ludewig Patentanwaltskanzlei
(86) Internationale Anmeldenummer: PCT/EP2016/070091
(87) Internationale Veröffentlichungsnummer: WO 2017/032839

(56) Entgegenhaltungen:
- WO-A1-2013/107683
- JP-A- S53 113 753
- US-A- 5 865 931
- US-A- 5 955 147

## Beschreibung

Die Erfindung betrifft eine Zierleiste, nämlich eine Profilleiste aus einem Aluminium-Material, die durch Strangpressen und nachfolgende mechanische und/oder chemische Oberflächenbehandlungen erzielt wurde. Diese Zierleiste besitzt eine dekorative Sichtfläche mit mindestens zwei auf den Betrachter optisch unterschiedlich wirkenden Oberflächenbereichen.

Zur dekorativen Ausgestaltung, insbesondere von Kraftfahrzeugen, werden Zierleisten mit zwei unterschiedlich wirkenden Oberflächenbereichen gewünscht. Bekannt sind zweifarbige Zierleisten, die dadurch erhalten werden, dass ein Teil der Sichtfläche der Zierleiste abgedeckt und der zugängliche Oberflächenbereich der Sichtfläche in einem zusätzlichen Verfahrensschritt behandelt wird, beispielsweise durch eine mechanische Oberflächenbehandlung, wie beispielsweise durch Sandstrahlen. Hierdurch wird eine polierte Zierleiste mit einem mattierten Oberflächenbereich versehen. In gleicher Weise kann eine solche abgedeckte Zierleiste auch einem weiteren chemischen Oberflächenbehandlungsschritt unterzogen werden und andersfarbig eingefärbt werden, beispielsweise durch ein Sprühverfahren. Auf diese Weise sind Zierleisten mit zwei Oberflächenbereichen unterschiedlichen Glanzgrades oder zweifarbige Zierleiste erzielbar. Nachteilig bei all diesen bekannten Verfahren ist, dass die zwei unterschiedlich wirkenden Oberflächenbereiche durch wenigstens einen zusätzlichen Verfahrensschritt erzielt werden. Eine Zierleiste ist beispielsweise aus den Dokumenten WO2013/107683 A1, US5865931 A und US5955147 A bekannt.

Aufgabe der vorliegenden Erfindung ist es, eine Zierleiste zur Verfügung zu stellen, welche ebenfalls optisch unterschiedlich wirkende Oberflächenbereiche besitzt, die jedoch in einfacherer Weise herstellbar sind.

Diese Aufgabe wird mit einer Zierleiste mit den Merkmalen des Anspruchs 1 erfüllt. Vorteilhafte Ausführungsformen einer solchen Zierleiste beschreiben die Unteransprüche.

In gleicher Weise, wie bei den bekannten stranggepressten Zierleisten aus Aluminium-Material, wird auch die erfindungsgemäße Zierleiste durch Strangpressen und nachfolgenden Oberflächenbehandlungen, nämlich mechanischen und/oder chemischen Oberflächenbehandlungen hergestellt. Die Zierleiste besteht aus einer Aluminium-Glänzlegierung mit einem limitierten Eisenanteil, nämlich aus einer Aluminium-Legierung der 6000-er Serie mit den üblichen Legierungselementen wie Magnesium, Silicium und Kupfer, aber mit nicht mehr als 0,25 Gew% Eisen. Hierbei sind Verunreinigungen mit weiteren Elementen auf einen Gesamtanteil von 0,15 Gew% und auf einem Anteil von 0,05 Gew% jedes einzelnen Elementes beschränkt. Auf diese Weise kann durch eine Oberflächenbehandlung eine glänzende Sichtfläche auf der stranggepressten Profilleiste erzielt werden. Bei einer bevorzugten Ausführungsform wird für einen guten Glanz der Sichtfläche der Eisenanteil auf 0,08 Gew% beschränkt. Für eine Zierleiste mit Hochglanzoberflächen wird eine Aluminiumlegierung verwendet, die nicht mehr als 0,04 Gew% Eisen aufweist. Bei einer weiteren Ausführungsform der Erfindung wird für eine hochglänzende Oberfläche der Zierleiste eine Aluminium-Legierung verwendet, bei der neben dem Eisenanteil auch der Anteil an Magnesium und Silicium limitiert ist und zwar ist der Gesamtanteil der beiden Elemente (Mg, Si) kleiner 1,3 Gew%.

Beim Strangpressen wird eine Profilleiste mit einem solchen Profilquerschnitt erzeugt, dass sich durch das Vorsehen mindestens einer markanten Linie auf der Sichtfläche zwei Oberflächenbereiche auf der Sichtfläche gebildet werden. Dabei verläuft diese markante Linie in Längsrichtung der Profilleiste und trennt die Sichtfläche in zwei Oberflächenbereiche auf. Es wird damit eine stranggepresste Profilleiste aus einem Aluminium-Material mit einer Sichtfläche erzeugt, die mindestens zwei für den Betrachter optisch unterschiedlich wirkende Oberflächenbereiche besitzt, welche durch mindestens eine markante Linie getrennt sind. Hierbei besitzt die markante Linie einen Radius, der den Wert 0,3 mm nicht überschreitet. Bei einer bevorzugten Ausführungsform ist der Radius der markanten Linie oder ggf. Linien nicht größer als 0,25 mm. Gleichzeitig wird durch eine gestalterische Einbettung der Zierleiste in die Fahrzeugkontur sichergestellt, dass die Anforderungen der EU-Richtlinie erfüllt sind, nämlich die Anforderungen der "Regelung Nr. 26 der Wirtschaftskommission der Vereinten Nationen für Europa "Einheitliche Bedingungen für die Genehmigung der Kraftfahrzeuge hinsichtlich ihrer vorstehenden Außenkanten" veröffentlicht im Amtsblatt der Europäischen Union vom 14.08.2010, Abs. 5.5.

Bei einer Ausführungsform der Erfindung wird durch das Strangpressen eine Profilleiste mit nur einer markanten Linie erzeugt und damit die Sichtfläche in Längsrichtung der Profilleiste in zwei unterschiedlich wirkende Oberflächenbereiche aufgeteilt. Hierbei sind die beiden Oberflächenbereichen der Profilleiste vorzugsweise in einem stumpfen Winkel zueinander ausgerichtet, so dass bei Lichteinfall durch die unterschiedliche Reflektion dieser beiden Oberflächenbereiche der Sichtfläche diese auf den Betrachter der Zierleiste unterschiedlich wirken. Die im stumpfen Winkel zueinander angeordneten Oberflächenbereiche verlaufen dabei jedoch nicht gerade aufeinander zu, wodurch sich eine spitze, vorstehende Trennkante ergeben würde, sondern durch das Strangpressen wird ein Profilquerschnitt erzeugt, wo in einem abgerundeten Oberflächenbereich eine markante Linie mit einem Radius nicht größer als 0,3 mm erzeugt wird und trotz des kleinen Radius wird diese markante Linie als Trennlinie zwischen den beiden Oberflächenbereichen für den Betrachter sichtbar.

Bei einer weiteren Ausführungsform der Erfindung werden mehrere markante Linien durch das Strangpressen in der Profilleiste erzeugt. Dabei können einzelne in einem größeren Abstand vorgesehene markante Linien, wie beim vorbeschriebenen Ausführungsbeispiel jeweils benachbarte Oberflächenbereiche mit glatt ausgebildeten Oberflächen voneinander trennen. Dies bedeutet, dass zwei markante Linien die Sichtfläche in drei Oberflächenbereiche aufteilen. Andererseits können mehrere dicht nebeneinander angeordnete markante Linien, die ebenfalls durch Strangpressen an der Sichtfläche der Zierleiste erzeugt werden, eine Strukturierung ergeben, bei der sich im Querschnitt der Profilleiste Erhöhungen und Vertiefungen abwechseln. Durch den Strangpressprozess verlaufen diese Erhöhungen und Vertiefungen in Längsrichtung der Profilleiste. Auf diese Weise ergibt die rillenförmige Strukturierung selbst einen optisch unterschiedlich wirkenden Oberflächenbereich. Diese Strukturierung kann dabei im Querschnitt einen wellenförmigen, trapezförmigen, sägezahnförmigen, rechteckförmigen oder anderen Querschnitt mit abwechselnden Erhöhungen und Vertiefungen zeigen, wobei die Strukturierung durch den Strangprozess gebildet wird und mehrere markante Linien zeigt, welche einen Radius besitzen, der nicht größer als 0,3 mm, vorzugsweise nicht größer als 0,25 mm, ist.

Beim Strangpressen wird die Strukturierung im Strangpresswerkzeug als Negativ abgebildet und während des Strangprozesses auf die Profilleiste übertragen. Die Profilleiste kann hierbei auch ein Hohlkammer- oder auch ein Vollprofil sein.

In vorteilhafter Weise wird durch die Erfindung eine Zierleiste zur Verfügung gestellt, die zur Verzierung im Innen- und Außenbereich von Kraftfahrzeuge eingesetzt werden kann, wie beispielsweise für Schachtleisten, Dachleisten, Dachrelingleisten, Bordkanten, Scheibeneinfassungen, Armaturenbrettverzierungen und anderen Dekorleisten. Eine Verwendung solcher Zierleisten ist auch in anderen Bereichen möglich, wie beispielsweise bei Geräten der Unterhaltungselektronik.

Der besondere Vorteil der neuen Zierleiste besteht darin, dass diese Zierleiste mit mindestens zwei unterschiedlich wirkenden Sichtflächen bereits beim Strangpressen in einem Arbeitsschritt, nämlich zusammen mit der Herstellung der Profilleiste erhalten wird. Nachfolgend durchlaufen die unterschiedlichen Oberflächenbereiche der Sichtfläche die gleichen Oberflächenbehandlungsschritte. Dies bedeutet, es wird eine Zierleiste mit mindestens zwei optisch unterschiedlich wirkenden Oberflächenbereichen hergestellt, ohne dass ein zusätzlicher Arbeitsschritt für eine der beiden Oberflächenbereiche der Sichtfläche notwendig wird. Durch das Erzeugen mindestens einer markanten Linie beim Strangpressen werden mindestens zwei Oberflächenbereiche erhalten, die trotz gleicher mechanischer und/oder chemischer Oberflächenbehandlungen unterschiedlich auf den Betrachter wirken.

Die Erfindung soll nachfolgend an Ausführungsbeispielen näher erläutert werden. Die Zeichnung zeigt:
- Fig. 1: Querschnitt durch einen Teil einer Zierleiste,
- Fig. 2: vergrößerter Ausschnitt der Sichtfläche einer weiteren Zierleiste,
- Fig. 3: vergrößerter Ausschnitt der Sichtfläche einer weiteren Zierleiste,
- Fig. 4: vergrößerter Ausschnitt der Sichtfläche einer weiteren Zierleiste,
- Fig. 5: vergrößerter Ausschnitt der Sichtfläche einer weiteren Zierleiste,
- Fig. 6: vergrößerter Ausschnitt der Sichtfläche einer weiteren Zierleiste,
- Fig. 7: vergrößerter Ausschnitt der Sichtfläche einer weiteren Zierleiste,
- Fig. 8: vergrößerter Ausschnitt der Sichtfläche einer weiteren Zierleiste.

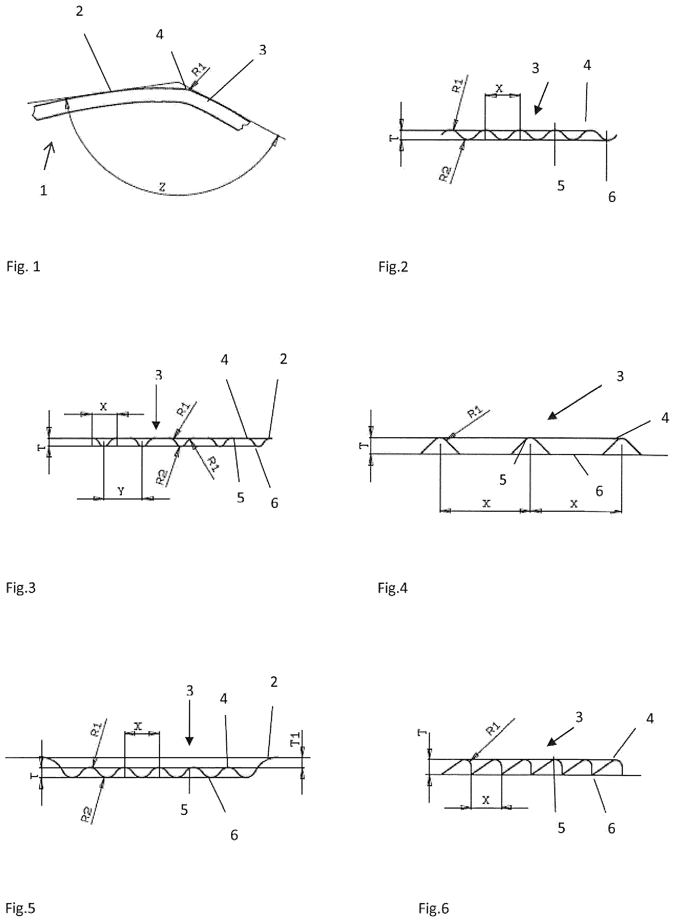

Fig. 1 zeigt einen Ausschnitt einer Zierleiste, die beispielsweise als Schachtleiste für Kraftfahrzeuge verwendet wird, nämlich zur Abdeckung des Fensterschachts dient. Diese Zierleiste besteht aus einer stranggepressten Profilleiste 1, welche in diesem Beispiel aus einer hochreinen Aluminiumlegierung mit 0,04 Gew% Eisen besteht. Ein solches Aluminium-Material ermöglicht Zierleisten mit hochglänzenden Oberflächen. Die Sichtfläche dieser Profilleiste 1 umfasst in diesem Beispiel die Oberflächenbereiche 2 und 3. Die Profilteile mit den Oberflächenbereichen 2 und 3 sind in einem stumpfen Winkel zueinander ausgerichtet. In diesem Fall in einem Winkel Z = 144°. Die Oberflächenbereiche 2 und 3 sind durch die markante Linie 4 voneinander getrennt. Diese markante Linie 4 verläuft in Profillängsrichtung und ist beim Strangpressen der Profilleiste 1 erzeugt worden. Um vorstehende Kanten zu vermeiden und trotzdem unterschiedlich wirkende Oberflächenbereiche 2 und 3 zu erzielen, ist ein kleiner Radius R1 für diese markante Linie vorgesehen worden, nämlich in diesem Beispiel R1=0,13 mm. Durch die gestalterische Einbettung dieses Radius in die Gesamtkontur des Fahrzeugs ist eine Konformität mit der bereits genannten EU-Richtlinie gewährleistet. Die stranggepresste Profilleiste 1 wird entsprechend dem Anwendungsfall mechanischen und chemischen Bearbeitungsschritten unterzogen, beispielsweise durch Streckbiegen an die Fahrzeugkontur angepasst, durch Fräsen und Stanzen mit den notwendigen Aufnahmen für Verbindungsmittel versehen sowie durch Polieren, Eloxieren und ggf. durch elektrolytisches Einfärben mit der gewünschten optischen Oberfläche versehen. Bei diesen mechanischen und chemischen Behandlungsschritten der Profilleiste 1 werden beide Oberflächenbereiche 2 und 3 gleich behandelt. Am Ende entsteht eine Zierleiste, die eingebaut im Kraftfahrzeug durch die unterschiedliche Reflektivitäten der verschieden geneigten Oberflächenbereiche 2 und 3 auf den Betrachter unterschiedlich wirken.

Je nach Profilquerschnitt für eine Zierleiste können auch mehr als eine markante Linie 4 an der Sichtfläche der Profilleiste 1 vorgesehen werden.

Die Figuren 2 bis 6 zeigen vergrößerte Ausschnitte der Sichtfläche unterschiedlicher Zierleisten, bei denen jeweils ein Oberflächenbereich 2 eine glatte Oberfläche aufweist und benachbart ein Oberflächenbereich 3 mit einer Strukturierung vorgesehen ist. Diese Strukturierung besteht aus mehreren Erhöhungen 5 und Vertiefungen 6. Diese rillenförmige Strukturierung ist beim Strangpressen der Profilleiste 1 erzeugt worden. Hierbei haben sich markante Linien 4 jeweils mit einem Radius R1 < 0,3 mm ergeben.

Im Ausführungsbeispiel der Fig. 2 wurde eine im Querschnitt sinusförmige Strukturierung in die Sichtfläche einer stranggepressten Profilleiste 1 durch Strangpressen geformt. Diese Strukturierung ergibt sich durch abwechselnd angeordnete Erhöhungen 5 und abwechselnd angeordnete Vertiefungen 6, die jeweils in einem Abstand X, in diesem Beispiel X=1,05 mm, angeordnet sind. Die Amplitude dieses sinusförmigen Verlaufs beträgt 0,2 mm und der Radius R1 der erzeugten markanten Linien 4, die in diesem Fall an dem höchsten Punkt der Erhebungen 5 gebildet sind, dieser Radius R1 beträgt 0,13 mm.

Bei dem Ausführungsbeispiel gemäß Fig. 3, wo ebenfalls eine vergrößerter Ausschnitt der Sichtfläche einer Profilleiste 1 gezeigt ist, ist benachbart zum glatten Oberflächenbereich 2 ein Oberflächenbereich 3 mit einer im Querschnitt trapezförmigen Strukturierung vorgesehen. Auch hier wechseln sich Erhöhungen 5 und Vertiefungen 6 ab. Jede Erhöhung 5 bildet zwei markante Linien 4 mit einem Radius R1. In diesem Beispiel ist R1 gleich 0,25 mm. Die Höhe der Erhebungen 5 bzw. die Tiefe T der Vertiefungen 6 beträgt 0,25 mm, der Abstand X der markanten Linien 4 beträgt 0,75 mm. Eine solche trapezförmige Strukturierung hat insbesondere bei Profilleisten, welche einem mechanischen Polierprozess unterzogen werden, den Vorteil, dass eine solche Strukturierung nacharbeitsfähig ist. Durch das Polieren kann Material in einer Größenordnung bis 40 µm abgetragen werden. Auch nach einem solchen Abtrag zeigt diese Strukturierung noch einen unverändert trapezförmigen Querschnitt. Um einen solchen mechanischen Polierprozess zu ermöglichen, sollte die Riffeltiefe T mindestens 0,1 mm betragen, vorzugsweise 0,1 bis 0,5 mm. Eine solche Zierleiste ist demzufolge nacharbeitsfähig.

Das Beispiel der Fig. 4 zeigt einen vergrößerten Ausschnitt der Sichtfläche einer weiteren Profilleiste. Hier ist ausschließlich der Oberflächenbereich 3 mit einer Strukturierung mit sinusförmigen Erhebungen 5 zu sehen. Die Erhebungen 5 sind in einem Abstand X von 3,7 mm vorgesehen und zwischen diesen liegen breite ebene Vertiefungen 6 in einer Riffeltiefe T von 0,5 mm. Auch diese Strukturierung ist durch Strangpressen erzeugt und zeigt markante Linien 4 im Bereich der höchsten Erhebung 5. Die Radien R1 dieser markanten Linien 4 betragen in diesem Beispiel 0,2 mm. Dieser strukturierte Oberflächenbereich 3 verdeutlicht besonders die Rillenform der Strukturierung. Auch dieser Oberflächenbereich 3 ist nacharbeitsfähig.

Fig. 5 zeigt ebenfalls einen vergrößerten Ausschnitt der Sichtfläche einer Profilleiste 1 mit dem glatten Oberflächenbereich 2 und dem strukturierten Oberflächenbereich 3, nämlich mit einer im Querschnitt sinusförmigen Strukturierung. Im Gegensatz zum Ausführungsbeispiel von Fig. 2 ist hier der Oberflächenbereich 3 gegenüber der Profiloberfläche, nämlich dem Oberflächenbereich 2, herabgesetzt. Die Erhebungen 5 sind unterhalb des Oberflächenbereichs 2 vorgesehen, nämlich um das Maß T1=0,2 mm abgesenkt. Auch hier ergeben die Erhebungen 5 markante Linien 4. Eine solche in die Sichtfläche eingebettete Strukturierung hat die Vorteile, dass die Radien R1 der markanten Linien 4 besser vor Beschädigungen geschützt sind und außerdem die Konformität mit der bereits angeführten EU-Richtlinie auch ohne Bezug zur Gesamtkontur des Fahrzeugs gewährleistet werden kann.

Das Ausführungsbeispiel gemäß Fig. 6 zeigt ebenfalls einen vergrößerten Abschnitt der Sichtfläche einer Profilleiste 1, in diesem Fall ausschließlich den Oberflächenbereich 3 mit einer im Querschnitt sägezahnförmigen Strukturierung. Auch hier wechseln sich Erhebungen 5 und Vertiefungen 6 ab. Die Erhebungen 5 sind jedoch nicht symmetrisch, sondern in diesem Beispiel nach rechts geneigt. Die Riffeltiefe T beträgt in diesem Beispiel 0,3 mm. Der Abstand X der Vertiefungen beträgt 0,6 mm und Radius R1 der markanten Linien 4 beträgt 0,13 mm. Eine solche sägezahnartige Strukturierung ergibt durch die unsymmetrische Kontur ein richtungsabhängiges optisches Erscheinungsbild. Auch hier können die Radien R1 so ausgeführt werden, dass bei einer Nacharbeit das optische Erscheinungsbild nicht nennenswert verändert wird.

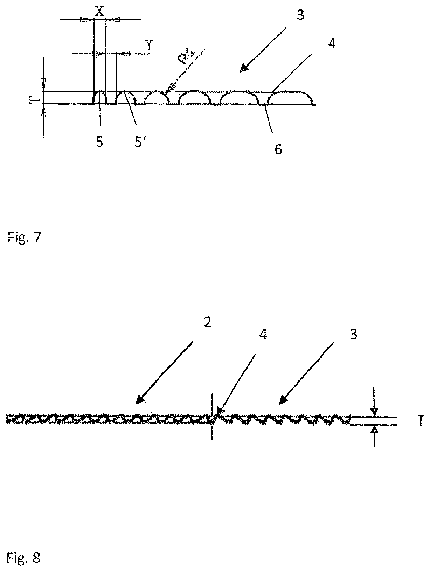

Das Beispiel der Fig. 7 zeigt einen vergrößerten Ausschnitt der Sichtfläche einer weiteren Profilleiste. Es ist ausschließlich der strukturierte Oberflächenbereich 3 mit den nahezu rechteckförmigen Erhebungen 5, 5' gezeigt. Zwischen den Erhebungen 5, 5' ist jeweils ein gleicher Abstand Y von 0,15 mm vorgesehen, jedoch haben die einzelnen Erhebungen 5, 5' eine zunehmende, Breite X, was zu einem besonderen optischen Effekt führt. Auch diese Strukturierung ist durch Strangpressen erzeugt und zeigt markante Linien 4 im Bereich der Erhebungen 5, 5'. Die Radien R1 dieser markanten Linien 4 betragen in diesem Beispiel 0,2 mm.

Das Ausführungsbeispiel von Fig. 8 zeigt ebenfalls einen vergrößerten Ausschnitt der Sichtfläche einer Profilleiste 1 mit dem strukturierten Oberflächenbereich 2 und dem strukturierten Oberflächenbereich 3, nämlich mit jeweils einer im Querschnitt sägezahnförmigen Strukturierung, wobei die Erhebungen im Oberflächenbereich 2nach rechts und im Oberflächenbereich 3 nach links geneigt sind. Die Riffeltiefe T beträgt in diesem Beispiel 0,35 mm. Der Radius R1 der markanten Linien 4 beträgt 0,1 mm. Eine solche sägezahnartige Strukturierung ergibt durch die unsymmetrische Kontur ein richtungsabhängiges optisches Erscheinungsbild. Auch hier können die Radien R1 so ausgeführt werden, dass bei einer Nacharbeit das optische Erscheinungsbild nicht nennenswert verändert wird.

Bei den bisher gezeigten Beispielen sind die Amplituden innerhalb der Strukturierung, d.h. die Höhe aller Erhebungen 5, gleich. Je nach dem Anwendungsfall der Zierleiste können an der Profilleiste jedoch auch Erhebungen und Vertiefungen mit abnehmender Amplitude einander abwechselnd.

Bei allen gezeigten Ausführungsbeispielen wird die Profilleiste 1 mit den unterschiedlichen Oberflächenbereichen 2 und 3 durch Strangpressen erzeugt. Eine dekorative Oberfläche erhält die Sichtfläche der Profilleiste 1 durch mechanische oder die chemische Oberflächenbehandlung, wie beispielsweise Polieren, elektrolytisches Glänzen, Eloxieren, elektrolytisches Einfärben u.a.

Alle Ausführungsbeispiele zeigen eine Profilleiste mit Radien R1 der markanten Linien 4, welche die Anforderungen der vorgenannten EU-Richtlinie erfüllt. Darüber hinaus kann eine Strukturierung für die Zierleiste vorgesehen werden, bei der Nacharbeit durch Bearbeitungsfehler, beispielsweise ein erneutes Polieren der Zierleiste, bei einer Zierleiste eine Oberflächenqualität abbildet, wie bei einer neu erzeugten Zierleiste. Die vorgesehene Strukturierung ist dabei so filigran, dass sie einen dekorativen Charakter auf der Sichtfläche der Zierleiste zeigt. Der optisch unterschiedliche Charakter der Oberflächenbereiche ergibt sich durch den Kontrast der verschiedenen Oberflächenbereiche mit und ohne Strukturierung, aber auch durch einzelne markante Linien 4, welche die unterschiedlich gezeigte Oberflächenbereiche abtrennen und damit ein vom Betrachtungswinkel abhängigen Effekt erzeugen.

Die Strukturierung im Oberflächenbereich 3 erscheint optisch im Allgemeinen matter als der glatte Oberflächenbereich 2. Die Strukturierung ist dabei so ausgeführt, dass sie nacharbeitsfähig ist. Dies wird insbesondere dann erreicht, wenn die Strukturierung im Querschnitt sinusförmig, trapez- bzw. rechteckförmig oder sägezahnförmig vorgesehen ist. Bei der sinusförmigen Struktur wird die Steigung der Flanken der Strukturierung so ausgeführt, dass sie durch Abtrag bei Nacharbeit nicht nennenswert geändert wird. Die Radien R1 und R2 bei den Erhebungen 5 und Vertiefungen 6 sind so ausgeführt, dass sie bei einer Nacharbeit nicht nennenswert verändert werden, so dass das optische Erscheinungsbild erhalten bleibt.

## Patentansprüche

1. Zierleiste, nämlich eine Profilleiste (1) aus einem Aluminium-Material, die durch Strangpressen und nachfolgende mechanische und/oder chemische Oberflächenbehandlungen erzielt wurde,
wobei die Profilleiste (1) eine dekorative Sichtfläche mit mindestens zwei auf den Betrachter optisch unterschiedlich wirkenden Oberflächenbereichen (2, 3) besitzt,
wobei
- die Profilleiste (1) aus einer Aluminiumlegierung der 6000-er Serie besteht, welche nicht mehr als 0,25 Gew% Eisen besitzt,
- wobei die zwei unterschiedlichen Oberflächenbereiche (2, 3) der Sichtfläche durch mindestens eine markante Linie (4) getrennt sind und diese markante Linie (4) beim Strangpressen der Profilleiste (1) geformt worden ist,
- **dadurch gekennzeichnet, dass** die beiden Oberflächenbereiche (2, 3) der Profilleiste (1) in einem stumpfen Winkel zueinander ausgerichtet sind und in einem abgerundeten Trennkantenbereich aufeinander zu verlaufen, wo die markante Linie erzeugt worden ist,
- wobei die markante Linie einen Radius (R1) besitzt, der nicht größer als 0,3 mm ist.

2. Zierleiste gemäß Anspruch 1, **dadurch gekennzeichnet, dass** die Profilleiste (1) aus einer Aluminiumlegierung besteht, welche neben Aluminium nicht mehr als 0,08 Gew% Eisen, vorzugsweise nicht mehr als 0,04 Gew% Eisen, besitzt.

3. Zierleiste gemäß Anspruch 1 oder 2, **dadurch gekennzeichnet, dass** die Profilleiste (1) aus einer Aluminiumlegierung besteht, welche einen limitierten Gesamtanteil an den beiden Legierungselementen Magnesium und Silicium enthält, nämlich (Mg + Si) < 1,3 Gew%.

4. Zierleiste nach einem der Ansprüche 1 bis 3, **dadurch gekennzeichnet, dass** mehrere markante Linien (4) einen Oberflächenbereich (3) der Sichtfläche bilden, deren Radius nicht größer als 0,25 mm ist und diese markanten Linien (4) beim Strangpressen in die Profilleiste (1) geformt worden sind.

5. Zierleiste gemäß Anspruch 4, **dadurch gekennzeichnet, dass** die markanten Linien (4) eine rillenförmige Strukturierung im Oberflächenbereich (3) darstellen, nämlich im Querschnitt der Profilleiste (1) abwechselnd Erhöhungen (5) und Vertiefungen (6) umfassen, welche in Längsrichtung der Profilleiste (1) verlaufen.

6. Zierleiste gemäß Anspruch 5, **dadurch gekennzeichnet, dass** die markanten Linien (4) durch eine im Querschnitt wellenförmige, trapezförmige, sägezahnförmige, rechteckförmige Strukturierung der Profiloberfläche gebildet sind.

7. Zierleiste nach einem der Ansprüche 4 bis 6, **dadurch gekennzeichnet, dass** die Strukturierung im Oberflächenbereich (3) mehrere Vertiefungen (6) besitzt, die bis in eine Tiefe (T) von 0,1 mm bis 0,5 mm in die Profilleiste (1) hinein reichen, vorzugsweise bis in eine Tiefe (T) von 0,1 bis 0,2 mm.

8. Zierleiste gemäß Anspruch 7, **dadurch gekennzeichnet, dass** die Strukturierung im Oberflächenbereich (3) mit den markanten Linien (4) die benachbarten Oberflächenbereiche (2) der Profiloberfläche nicht überragt, vorzugsweise unterhalb dieser Oberflächenbereiche (2) der Profiloberfläche liegt.

9. Zierleiste gemäß Anspruch 8, **dadurch gekennzeichnet, dass** sich die äußeren Stirnflächen der Erhöhungen (5) der Strukturierung mindestens um einen Wert (T1), welcher der halben Amplitude entspricht, unterhalb der Profiloberfläche befinden.

10. Zierleiste nach einem der Ansprüche 1 bis 9, **dadurch gekennzeichnet, dass** die dekorativen Oberflächen der optisch unterschiedlich wirkenden Oberflächenbereiche (2, 3) der Sichtfläche durch die gleichen mechanischen und chemischen Oberflächenbehandlungen erzielt worden sind.

11. Zierleiste für Kraftfahrzeuge oder für Bauteile im Nicht-Automotive-Bereich, wie z.B. Geräte der Unterhaltungselektronik, nach einem der Ansprüche 1 bis 10.

## Claims

1. Decorative strip, namely profiled strip (1) made of an aluminium material, which is the result of extrusion and subsequent mechanical and / or chemical surface treatments,
wherein the profiled strip (1) has a decorative visible surface with at least two surface areas (2, 3) that appear different to the observer,
- wherein the profiled strip (1) consists of an aluminium alloy of the 6000 series, which does not contain more iron than 0.25% by weight,
- wherein the two different surface areas (2, 3) of the visible surface are separated by at least one distinctive line (4) and this distinctive line (4) has been formed during the extrusion of the profiled strip (1),
- **characterised in that**
the two surface areas (2, 3) of the profiled strip (1) are aligned at an obtuse angle to one another and run towards one another in a rounded demarcation edge area where the distinctive line has been created,
- wherein the distinctive line has a radius (R1) which is not greater than 0.3 mm.

2. Decorative strip according to claim 1, **characterised in that** the profiled strip (1) consists of an aluminium alloy which, in addition to aluminium, has no more iron than 0.08% by weight, preferably no more iron than 0.04% by weight.

3. Decorative strip according to claim 1 or 2, **characterised in that** the profiled strip (1) is made of an aluminium alloy containing a limited total amount of the two alloying elements magnesium and silicon, namely (Mg + Si) <1.3% by weight.

4. Decorative strip according to any one of claims 1 to 3, **characterised in that** a plurality of distinctive lines (4) form a surface area (3) of the visible surface, the radius of which is not greater than 0.25 mm, and these distinctive lines (4) have been formed in the profiled strip (1) during extrusion.

5. Decorative strip according to claim 4, **characterised in that** the distinctive lines (4) depict a groove-shaped structuring in the surface region (3), namely in the cross-section of the profiled strip (1), comprising alternating elevations (5) and depressions (6) that run in the longitudinal direction of the profiled strip (1).

6. Decorative strip according to claim 5, **characterised in that** the distinctive lines (4) are formed by a cross-sectionally wave-shaped, trapezoidal, sawtooth-shaped, rectangular structuring of the profiled strip surface.

7. Decorative strip according to any one of claims 4 to 6, **characterised in that** the structuring in the surface region (3) has a plurality of depressions (6) which extend into the profiled strip (1) to a depth (T) of 0.1 mm to 0.5 mm, preferably to a depth (T) of 0.1 to 0.2 mm.

8. Decorative strip according to claim 7, **characterised in that** the structuring in the surface region (3) with the distinctive lines (4) does not project beyond the adjacent surface regions (2) of the profiled strip surface, and preferably is below these surface regions (2) of the profiled strip surface.

9. Decorative strip according to claim 8, **characterised in that** the outer end faces of the elevations (5) of the structuring are located below the profiled strip surface by at least a value (T1) corresponding to half the amplitude.

10. Decorative strip according to any one of claims 1 to 9, **characterised in that** the decorative surfaces of the visually different surface areas (2, 3) of the visible surface have been achieved by the same mechanical and chemical surface treatments.

11. Decorative strip for motor vehicles or for components in the non-automotive sector, such as consumer electronics devices, according to any one of claims 1 to 10.

## Revendications

1. Baguette décorative, à savoir baguette profilée (1) en matériau aluminium, obtenue par extrusion à la presse suivie de traitements superficiels mécaniques et/ou chimiques,
sachant que la baguette profilée (1) possède une surface visible décorative comprenant au moins deux zones superficielles (2, 3) productrices d'effets optiques différents sur l'observateur,
- sachant que la baguette profilée (1) se compose d'un alliage aluminium de la série 6000 ne contenant pas plus de 0,25 % en poids de fer,
- sachant que les deux zones superficielles (2, 3) différentes de la surface visible sont séparées par au moins une ligne marquante (4) et que cette ligne marquante (4) a été formée pendant l'extrusion à la presse de la baguette profilée (1),
- **caractérisée en ce que**
les deux zones superficielles (2, 3) de la baguette profilée (1) sont orientées l'une par rapport à l'autre de sorte à former un angle obtus et qu'elles convergent l'une vers l'autre dans une zone arrondie à bords de séparation où la ligne marquante a été générée,
- sachant que la ligne marquante présente un rayon (R1) non supérieur à 0,3 mm.

2. Baguette décorative selon la revendication 1, **caractérisée en ce que** la baguette profilée (1) se compose d'au moins un alliage aluminium composé outre l'aluminium de pas plus de 0,08 % en poids de fer, de préférence de pas plus de 0,04 % en poids de fer.

3. Baguette décorative selon la revendication 1 ou 2, **caractérisée en ce que** la baguette profilée (1) se compose d'un alliage aluminium composé d'une part totale limitée des deux éléments composant l'alliage, à savoir de magnésium (Mg) et de silicium (Si) représentant ensemble < 1,3 % en poids.

4. Baguette décorative selon l'une des revendications 1 à 3, **caractérisée en ce que** plusieurs lignes marquantes (4) forment une zone superficielle (3) de la surface visible dont le rayon n'est pas supérieur à 0,25 mm et que ces lignes marquantes (4) ont été formées pendant l'extrusion à la presse dans la baguette profilée (1).

5. Baguette décorative selon la revendication 4, **caractérisée en ce que** les lignes marquantes (4) présentent une structuration en forme de rainures dans la zone superficielle (3), à savoir qu'elles comprennent en alternance, dans la section transversale de la baguette profilée (1), des saillies (5) et des creux (6) allant dans le sens longitudinal de la baguette profilée (1).

6. Baguette profilée selon la revendication 5, **caractérisée en ce que** les lignes marquantes (4) sont formées, dans la section transversale, par une structuration ondulée, trapézoïdale, en dents de scie, rectangulaire, de la surface profilée.

7. Baguette profilée selon l'une des revendications 4 à 6, **caractérisée en ce que** la structuration dans la zone superficielle (3) possède plusieurs creux (6) atteignant une profondeur (T) comprise entre 0,1 mm et 0,5 mm dans la baguette profilée (1), de préférence une profondeur (T) de 0,1 mm à 0,2 mm.

8. Baguette profilée selon la revendication 7, **caractérisée en ce que** la structuration dans la zone superficielle (3), composée des lignes marquantes (4), ne dépasse pas les zones superficielles voisines (2) de la surface profilée, qu'elle se trouve de préférence en dessous de ces zones superficielles (2) de la surface du profilé.

9. Baguette décorative selon la revendication 8, **caractérisée en ce que** les surfaces frontales externes des élévations (5) de la structuration se trouvent au moins autour d'une valeur (T1), qui correspond à la moitié de l'amplitude, en dessous de la surface du profilé.

10. Baguette décorative selon l'une des revendications 1 à 9, **caractérisée en ce que** les surfaces décoratives des zones superficielles (2, 3) de la surface visible productrices d'effets optiques différents ont été obtenues par les mêmes traitements superficiels mécaniques et chimiques.

11. Baguette décorative pour véhicules motorisés ou pour composants situés hors du domaine automobile, par ex. pour appareils électroniques grand public, selon l'une des revendications 1 à 10.
